# EUROPEAN PATENT SPECIFICATION

(11) **EP 3 797 933 B1**
(45) Date of publication and mention of the grant of the patent: **02.09.2026**
(21) Application number: 19200010.7
(22) Date of filing: 27.09.2019
(51) Int. Cl.: B25J 9/00

(54) **ARRANGEMENT FOR A CONTROLLED MOVEMENT OF AN ARM OF HUMAN**
ANORDNUNG FÜR EINE KONTROLLIERTE BEWEGUNG EINES ARMS EINES MENSCHEN
AGENCEMENT POUR UN MOUVEMENT CONTRÔLÉ D'UN BRAS HUMAIN

(43) Date of publication of application: 31.03.2021
(73) Proprietor: Fraunhofer-Gesellschaft zur Förderung der angewandten Forschung e.V., 80686 München (DE)
(72) Inventor: SCHNEIDER, Urs, 70569 Stuttgart (DE); YAMAN, Alper, 70569 Stuttgart (DE)
(74) Representative: Rösler, Uwe

(56) References cited:
- WO-A1-2017/197886
- WO-A2-2018/093448
- CN-U- 205 019 355
- US-A1- 2008 009 771
- US-A1- 2012 101 419

## Description

### Technical Field

The invention relates to an arrangement for a controlled movement of an arm of a human having at least one driven actuator operatively engageable with the arm to enable a rotation about an axis of a joint of the arm.

### Background of the Invention

Brachial plexus is a braid of nerve fibers branching from the spinal cords for shoulder, arm and hand control. Motor vehicle and motorcycle accidents, falls, sport accidents, and difficult births may damage or rupture these nerves causing serious damage to the musculoskeletal system of the shoulder and arm. In less severe injuries, patients feel numbness or weakness in their arms. In more severe injuries, pain, complete or partial lack of movement and feeling may develop. When damaged Brachial Plexus is not treated in good time, joints, especially the shoulder joint, may become stiffer, therefore it becomes difficult to move. Muscle atrophy may develop, as well.

Brachial plexus injuries can affect one or more joints in the arm and hence restrict the motion in different levels.

Known therapies of such treatment are daily exercises to increase the range of motion and physical therapy can help decrease the effects of these injuries. These exercises can prevent joint stiffness. When the affected nerves cannot recover naturally, brachial plexus surgeries are performed typically for nerve repair, nerve graft, nerve transfer, or tendon and muscle transfer. After those surgeries, patients involve in rehabilitation to prevent joint stiffness, contractures, or muscle atrophy. Physiotherapists may recommend them to use splints or braces to support weak joints and limb.

In the rehabilitation process or furthermore patients need help in their daily lives, especially in cases in which therapy attempts fail or even partially, to grasp or reach objects, put on their own clothes etc.. Grasping or reaching objects is the common task of the hand, fingers and also wrist, elbow, and shoulder. All these joints together, provide very high degrees of freedom in 3D space with high ranges of motions. In the case of brachial plexus injury patients, their muscular control is broken or weak, and therefore range of motion is highly reduced. This prevents successful grasping or reaching of objects. These actions may become easier or only possible by assisting patients in axial shoulder rotation and abduction and adduction of their affected arms.

The document WO 2012/099995 A2 discloses an adaptive arm support system and method for use comprising a harness configured to be worn by a human and an arm support coupled to the harness. The arm support is configured to accommodate and follow movement of the arm without substantially interfering in such movement. The arm support may at least partially offset a gravitational force acting on the arm as the human moves and the arm support follows the movement of the humans arm. Hereby one or more compensation elements coupled to the arm support transmit at least a portion of the weight of the human's arm to the harness or torso of the human. The at least one compensation element may be a spring or an electric system, a hydraulic system or a pneumatic system. All disclosed embodiments show a force supported arm movement around a horizontal axis of rotation which means raising and lowering the arm are supported.

The document WO 2019/069069 A1 discloses an apparatus for the rehabilitation, assistance and/or augmentation of arm strength providing an active elbow joint which supports flexion and extension of the elbow joint.

The arrangements disclosed in the above documents only provide a passive pivot bearing on the shoulder to treat brachial plexus in a very limited form.

The document WO 2017/197886 A1 discloses a device for solving problem of strange configuration of exosceleton robot shoulder joint which provides a motor which rotates the arm about it's arm axis but only in one position in which the arm of a human is raised horizontally and directing in a forward direction. In all other arm positions rotation of the motor leads to an arm movement respectively arm rotation around a spatial axis, which is different to the longitudinal axis of the humerus.

The document US 2012/101419 A1 (which by the European Patent Office is seen as the closest prior art document) discloses a shoulder orthosis including an internal/external rotation device configured to facilitate internal and external rotation of a shoulder joint of a person, wherein a force-imparting member is configured to impart or transmit force to a forearm and a hand of the person. As the device is operated, internal or external rotation of the shoulder joint is effectuated, and the cantilever arm rotates within an internal/external rotation plane, while the elbow is maintained at 90 degrees of flexion when the person's arm is properly secured to the orthosis.

### Summary of the Invention

It is an object of the invention to provide a light weight as possible and flexible as possible support system for the shoulder mobility of a human being suitable and designed to be worn in the manner of an exoskeleton by humans without having to suffer a significant restriction of body mobility. It is a further object to enable a human while using the support system to treat and train the shoulder of brachial plexus patience in a controlled manner so that healing process can be controlled, supported and accelerated. The support system should be usable for both rehabilitation and motion augmentation in daily activities of humans.

The object is achieved by the sum total of the features in the independent claims 1 and 12. Claim 1 describes an arrangement for a controlled movement of an arm of a human, claim 12 describes a method for driving the arrangement.

The invention can be modified advantageously by the features disclosed in the subclaims as well as in the following description especially referring to preferred embodiments illustrated in figures.

The inventive arrangement for a controlled movement of an arm of a human having at least one driven actuator operatively engageable with the arm to enable a rotation about an axis of a joint of the arm is characterized in that the driven actuator is designed and arranged to interact with a first attachment which is fixable to an upper arm portion of the arm such that the first attachment, when fixed at the upper arm portion, rotates around a longitudinal axis of the humerus.

A first pivot bearing is attached to the first attachment for rotational movement around the longitudinal axis of the humerus which is directly or indirectly connected to and supported by a harness wearable by the human. The driven actuator is mounted on said first pivot bearing or is arranged on and supported by the harness directly. The interaction of the driven actuator and the first pivot bearing causes a shoulder rotation around the axis of the humerus exclusively, since it is not possible that passive components like spring elements can gain rotational torque from natural body movements.

The driven actuator which is an electric, a pneumatic or hydraulic or any other type of motor, can be arranged either in direct combination with the first pivot bearing in case of having a rotatable output shaft which is aligned coaxially to the longitudinal axis of the first pivot bearing and which interacts with the first pivot bearing to provide a controlled rotation of the first attachment fixed at the upper arm portion of the arm of the human.

The driven actuator can also be arranged on or in the harness in which further components can be accommodated, like a power supply unit and a control unit or other components being connected electrically, mechanically or fluidly with the driven actuator.

Alternatively the driven actuator can be designed as a linear drive having a linear movable component which is coupled to a transmission mechanism for transforming linear movement into rotation. In such case it is suitable to arrange the driven actuator into the harness which advantageously provides at least one shoulder strap to which the first pivot bearing is connected directly or indirectly, a hip belt and a support link, which connects the shoulder strap and the hip belt. For the sake of the best possible load and moment distribution which acts on the body of the human, it is advantageous to place the driven actuator as well the before mentioned power supply unit, the control unit and optionally other components into the hip belt so that a main part of the weight of the inventive arrangement will be closer to the ground. In case of a linear actuator the linear push/pull motion is transmitted by a flexible transmission systems, for example by cables whose ends are connected to a gear that transmits the linear movement into rotation to drive the first pivot bearing.

To transmit the rotary motion of the driven actuator as gently as possible to the human arm the first attachment provides a half shell being ergonomically adapted to the contour of the upper arm portion, which can be attached by means of releasable fastening means, for example in the form of the a velcro fastener tape, rotationally fixed to the upper arm.

While at the upper end of the first attachment the first pivot bearing is attached directly or indirectly a further pivot bearing is arranged torque proof at the lower end of the attachment such that when the first attachment is fixed at the upper end portion the further pivot bearing is aligned to an elbow rotation axis and is further connected to a second attachment being fixable to the lower arm portion of the human arm. The second attachment is preferably designed comparable to the first attachment of the upper arm portion as an ergonomically adapted half shell. The further pivot bearing which is aligned to the elbow joint is a pure passive joint.

As can be seen from the description of an illustrated preferred embodiment both attachments, each being torque proved fixed to the human arm are connected to each other as well as to the driven actuator respectively to the first pivot bearing by low compliance elastic attachments, for example in the form of stable and light weight connecting rods, so that the actuator-initiated rotational moment is transmitted uniformly and nearly lossless to the whole arm of the human.

For enabling abduction and adduction of the arm a so called second pivot bearing is directly or indirectly connected to the first pivot bearing for pivoting the first attachment being fixable to the upper arm portion around an axis oriented orthogonally to the longitudinal axis of the humerus and is connected to and supported by the harness. In difference to the first pivot bearing which is driven by the actuator of purpose of controlled rotation around the longitudinal axis of the humerus, the second pivot bearing is a pure passive component which rotational mobility can be augmented or lowered by a passive spring-like component which is arranged between the first attachment and a part of the harness especially at the shoulder strap which is directly opposite to the upper arm. Such a spring-like component can help the arm to synchronize with the movement or tilt of human trunk in coronal plane in a limited range of motion.

In order to achieve optimized therapeutic effects for the treatment of brachial plexus patients the activation of the driven actuator can be controlled by electric signals which are receivable by at least one body contact electrode and/or with a manually trigger unit and/or with a motion sensor, like an inertial acceleration sensor, integrated into a wearing unit designed for fasting to a movable body part of the human. Alternatively it is also possible to drive the actuator with a given movement pattern, which is optionally individually customizable.

In case of using body-specific electric signals as a basis for activation of the actuator at least one body contact electrode for receiving body-specific electric signals is connected to the control unit which generates signals to drive the actuator. The at least one body contact electrode is a skin contact electrode preferably designed for receiving electromyography or spine signals. In another embodiment the body contact electrode is an invasive nerve electrode like a cuff-electrode which is in direct contact to a nerve bundle.

Depending on the level or brachial plexus injury and where it effects, electromyographic signals can be collected either from a muscle in a weak arm region, from a muscle transferred from different parts of the human body or from a third region. The control unit preferably provides an electromyographic or spine signals input and a rotary encoder feedback input which receives information from the driven actuator concerning torque, rotational position etc..

In addition of using electromyography or spine signals the inventive arrangement can be controlled manually in open-loop manner with another joint movement in the rest of the body, for example by rotation of the thumb or wrist in the healthy arm or with two push-buttons on any healthy hand. See further description of a preferred embodiment.

To treat arm areas to be treated beyond the movement stimulation according to the before explained arrangement in kind of an exoskeleton, a further preferred embodiment provides at least one vibrotactile transducer element which is arranged directly or indirectly to at least one attachment of the arrangement such that the vibrotactile transducer element contacts the skin of the human. The vibrotactile transducer element is connected to the control unit also for receiving activation signals which preferably depends on the rotation initiated by the driven actuator.

The inventive arrangement enables a new kind of treatment and/or support of the arm movability by powering the driven actuator on basis of signals being generated by manual specification and/or by invasive or non-invasive tapping of electric neuronal signals received from the human. With the help of the inventive arrangement the healing process of brachial plexus patients can be improved and accelerated significantly. Furthermore the inventive arrangement allows a new type of training for strengthening and activating the shoulder muscles and, moreover, in cases of sustained heavy shoulder loads to support the shoulder and arm strength.

The invention can be modified advantageously by the features disclosed in the sub claims as well in the following description especially referring to preferred embodiments illustrated in figures.

### Brief Description of the Figures

The invention shall subsequently be explained in more detail based on exemplary embodiments in conjunction with the drawing. In the drawing
- Fig. 1: first embodiment of the arrangement which is carried by a human,
- Fig. 2: alternative embodiment of the arrangement which is attachable to the arm of a human,
- Fig. 3: third embodiment of the arrangement including a linear actuator for driving the pivot bearing,
- Fig. 4a,b: body areas for receiving body specific electric signals,
- Fig. 5a,b,c: embodiments showing wearable units for generating of conscious signals and
- Fig. 6: embodiment of the inventive arrangement providing vibration transducers.

### Detailed Description of exemplary Embodiments

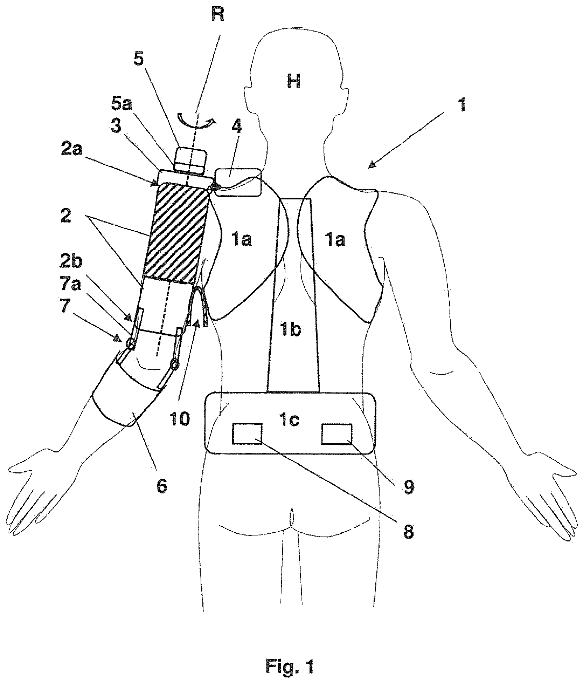

Figure 1 shows a human H from it's back side wearing the inventive arrangement for a controlled movement of the arm of a human. The arrangement provides a harness 1 composed of the following components: a left and right shoulder strap 1a which both are connected to a support link 1b which is arranged parallel along the spine of the human and which ends on a hip belt 1c which serves as a main support structure. The support link 1b is rigid longitudinally and elastically to allow spinal bending.

On the weak arm of the human which is in Fig. 1 the left hand side the inventive arrangement is designed and arranged in the following way: In the upper arm region a first attachment 2 preferably designed as a half shell component and ergonomically fitted to the outer contour of the upper arm is fixed on it by using for example a velcro, which ensures that the first attachment is torque proof attached to the upper arm.

At the upper end 2a of the first attachment 2 a first pivot bearing 3 is attached having an axis of rotation R which is coincident with the longitudinal axis of the humerus of the human H. The first pivot bearing 3 is directly or indirectly connected to the left hand shoulder strap 1a. In case of the illustration in Fig. 1 the first pivot bearing 3 is connected to a second pivot bearing 4 connected directly to the left shoulder strap 1a which is a passive one degree of freedom joint having a pivoting axis which is orthogonally to the longitudinal axis R of the humerus. The second pivot bearing 4 allows free abduction and adduction of the arm of the human H. Optionally the second pivot bearing is slidably mounted on the left shoulder strap along a horizontal axis to adjust the first pivot bearing 3 relative to the longitudinal axis of the humerus of the human H or the so called shoulder rotation axis.

On top of the first pivot bearing 3 a driven actuator 5 is positioned and coupled to the first pivot bearing such that the first attachment 2 along with the arm of the human H which is covered by the first attachment 2 at least in regions are set in rotation about the longitudinal axis R of the humorous. Between the driven actuator 5 and the first pivot bearing a rotation encoder 5a is placed optionally to detect rotational action, torque, rotation position etc. The rotational encoder 5a delivers rotation information signals which are fed to a control unit 8 described in more detail below.

The actuator 5 provides in case of the embodiment shown in Fig. 1 a rotational shaft being aligned coincident with the longitudinal axis of the humerus for powering the first pivot bearing 3 which transmits the torque of the actuator 5 to the first attachment 2.

To transfer the rotation to the entire length of the arm and, moreover, not to restrict the arm mobility a second attachment 6 is attached to the lower end 2b of the first attachment 2 by a third pivot bearing 7. The second attachment 6 is designed comparable to the first attachment 2 like a half shell which is ergonomically fitted to the outer contour of the lower arm and being fixed thereon by a velcro. The third pivot bearing 7 is a passive one degree of freedom joint and allows free elbow mobility. Connecting struts 7a connect the third pivot bearing 7 with the first and second attachment 2, 6. The struts 7a are rigid and provide low compliance so that the torque initiated by the driven actuator 7 can be transmitted nearly lossless.

For driving the actuator 5 which preferably is an electric motor, but can also be a pneumatical or hydraulical motor unit, a control unit 8 as well at least a power supply unit 9 are necessary and connected to the actuator 5. All these actuator relevant components 8, 9 are integrated in the hip belt 1c which is the lowest portion of the inventive arrangement and thereby the overall center of gravity of the inventive arrangement comes as close as possible to the person or to the center of the person for enhanced stability reasons.

Natural oscillations or movements of the body of the human can be further augmented or damped by a passive spring-like component 10 which is attached to the first attachment 2 and the left shoulder strap 1a and provide abduction and/or adduction passively in a limited range of motion.

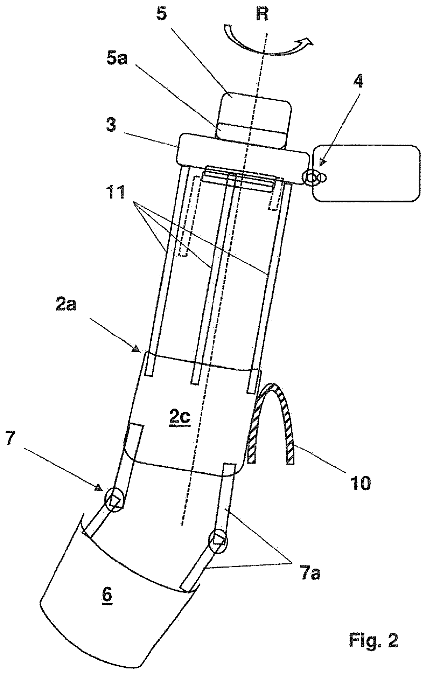

Fig. 2 shows a reduced view on components of the inventive arrangement attached to the arm, wherein the first attachment 2 to the upper arm for weight reasons is modified. The alternative embodiment shows a shortened half shell 2c which embraces the lower part of the upper arm above the elbow on one side and serves as a mounting structure for the third pivot bearing 7. The first pivot bearing 3 is connected with the upper end 2a of the shortened half shell 2c by parallel bars 11 which are rigid and of low compliance so that the torque transmission is nearly lossless.

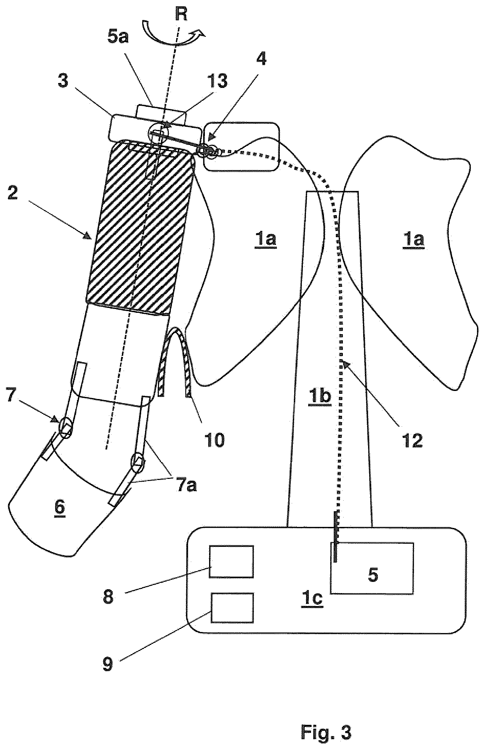

Fig. 3 shows an alternative embodiment of the inventive arrangement in which the driven actuator 5 is placed in the hip belt 1c together with the control unit 8 and the power supply unit 9. The reference numbers of all components which are described already remain the same.

By this arrangement, in comparison with the arrangement shown in Fig. 1 or 2 in which the driven actuator 5 is placed on top of the first pivot bearing 3 that means above the shoulder and beside of the head of the human, the center of gravity of the overall arrangement can be lowered significantly. This leads to an optimized stability and comfort for the human.

Alternative of using a rotational motor as a driven actor 5 a linear actuator concept is also applicable. In Fig. 3 it is assumed that the driven actuator 5 is a linear motor having a linear movable component which linear movement is transmitted by a linear transmission mechanism 12 for example in form of a cable moving freely inside a hollow cable sheet. The upper end of the cable contacts a connection means 13 at the first pivot bearing 3 which transforms linear movement into rotation around the longitudinal axis R of the humerus. All other components of the arrangement shown in Fig. 3 corresponds to components which are already described in connection with Fig. 1.

The driven actuator 5 is activated and controlled by the control unit 8 which is positioned in the hip belt 1c as already explained.

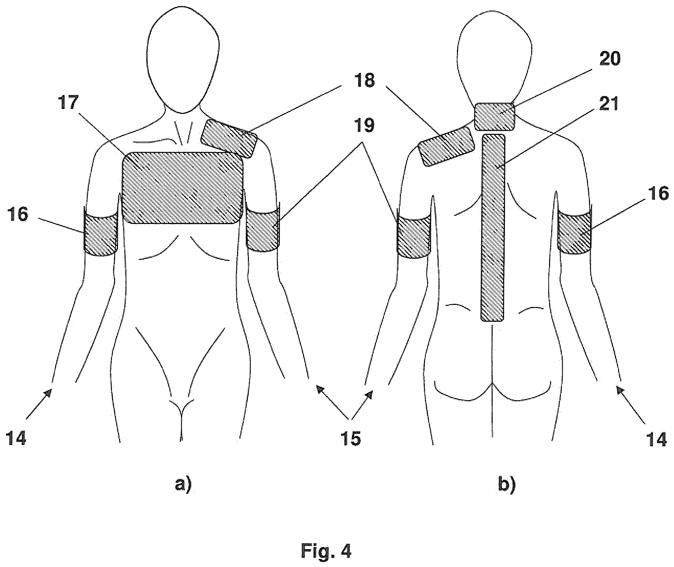

There are different options for controlling arm movement with the inventive arrangement. A first option provides movement control on basis of body specific physiological signals which are received by at least one body contact electrode which can be a skin contact electrode for receiving electromyographic or spine electric signals. Fig. 4 shows preferred body areas for tapping electric signals. Fig. 4a show a frontal side, Fig. 4b a posterior view of the human body having a healthy arm 14 and a weak arm 15 on which the inventive arrangement is arranged which is not illustrated in Fig. 4a, b. The hatched fields show the preferred regions of tapping body specific signals. Electromyographic signals can be derived from muscles in healthy arm area 16, from chest area 17, from upper arm and shoulder areas 18, 19 of the weak arm 14 or from transferred muscles after muscle transfer surgery which may be too weak but provide full control. Further electromyographic signals can be tapped from the neck area 20. Using invasive or non-invasive electrodes in the posterior spine area 21 spine signals can be tapped for control purpose. On basis of the tapped body specific signals activation of the driven actuator 5 can be preferably performed in a closed-loop control with feedback from the first pivot bearing 3 in which the rotatory encoder 3a is provided.

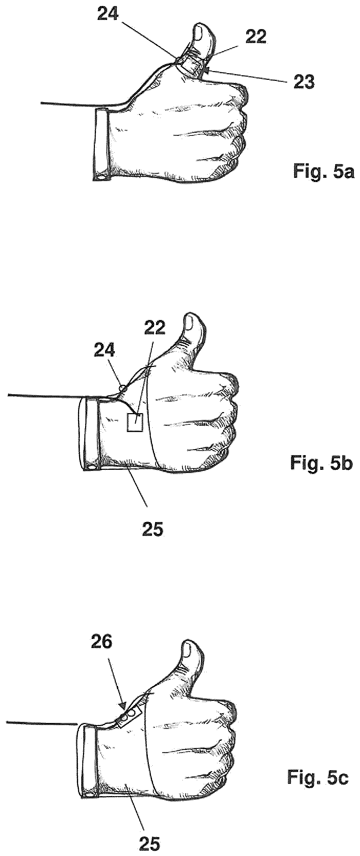

Alternatively or in combination by using the before mentioned body specific signals activation of the driven actuator can be performed by a manual arm control unit in an open-loop manner. Fig. 5a shows a motion sensor 22 which is fixed at the thumb by a wrap 23 preferably at the healthy hand. The human can control the thumb movement and can generate a signal to the control unit 8 to switch on or off rotation in clockwise or counterclockwise direction manually. For switching on and off the motion sensor 22 additionally a single push button 24 is arranged at the wrap 23.

Fig. 5b shows an alternative way of fixation of a motion sensor 22 at the hand by a wrist-hand wrap 25.

Fig. 5c shows a wrist-hand wrap 25 including two buttons 26 for switching on or off rotation in clockwise or counterclockwise direction only.

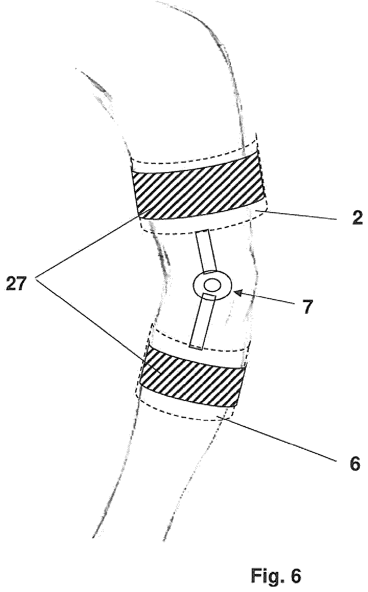

Fig. 6 shows a preferred combination with vibrotactile transducer elements 27, being arranged at the first and second attachment 2, 6. Each vibrotactile transducer element 27 embraces the respective arm area like a sleeve so that weak muscle portions can be stimulated by acupressure effect in combination with or in superposition with rotational arm movement. Further it is possible to apply separate vibrotactile transducer elements at other parts of the arm or body region.

The inventive arrangement is aimed primarily to brachial plexus patients providing an untethered, i.e. non-stationary exoskeleton with active shoulder rotation with several control options like using electromyographic or manually generated signals, passive abduction or adduction supported by spring element, and vibrotactile feedback to weak muscles. The inventive arrangement can also be used for rehabilitation and training purpose as well for augmentation in daily activities.

### List of References Numerous

- 1: harness
- 1a: shoulder trap
- 1b: support link
- 1c: hip belt
- 2: first attachment
- 2a: upper end
- 2b: lower end
- 2c: shortened half shell
- 3: first pivot bearing
- 3a: non-rotational part - rotation encoder
- 4: second pivot bearing
- 5: driven actuator
- 6: second attachment
- 7: third pivot bearing
- 7a: connecting struts
- 8: control unit
- 9: power supply unit
- 10: passive spring-like component
- 11: parallel bars
- 12: linear transmission mechanism
- 13: connection means
- 14: healthy arm
- 15: weak arm
- 16: arm area
- 17: chest area
- 18: shoulder area
- 19: arm area
- 20: neck area
- 21: spine area
- 22: motion sensor
- 23: single push button
- 24: wrap
- 25: wrist-hand wrap
- 26: button
- 27: vibrotactile transducer element

## Claims

1. An arrangement for a controlled movement of an arm of a human having at least one driven actuator (5) operatively engageable with the arm to enable a rotation about an axis of a joint of the arm, wherein the driven actuator (5) interacts with a first pivot bearing (3) being attached to a first attachment (2) which is fixable to an upper arm portion of the arm, and said first pivot bearing (3) is connected to and supported by a harness (1) wearable by the human and the driven actuator (5) is connected to a control unit (8) and a power supply unit (9) to provide a controlled rotation of the first attachment (2) fixed at the upper arm portion of the arm of the human,
**characterised in that** actuation of the driven actuator (5) causes the first attachment (2) to exclusively rotate the upper arm portion around a longitudinal axis (R) of the humerus.

2. The arrangement according to 1,
wherein a second pivot bearing (4) is directly or indirectly connected to the first pivot bearing (3) for pivoting the first attachment (2) around an axis orthogonally to the longitudinal axis (R) of the humerus and is connected to and supported by the harness (1).

3. The arrangement according to the claim 1 or 2,
wherein the driven actuator (5) is mounted on said first pivot bearing (3) or arranged on and supported by the harness (1) directly.

4. The arrangement according to one of the claims 1 to 3,
wherein the driven actuator (5) is an electrical, a pneumatical or a hydraulical motor having a rotatable output shaft or at least one linear moveable component,
in case of having a rotatable output shaft the shaft is coupled directly or indirectly by a gearing with the first attachment (2) and in case of having a linear moveable component, the component is coupled to a transmission mechanism (12) for transforming linear movement into rotation.

5. The arrangement according to one of the claims 2 to 4,
wherein the attachment provides an upper and lower end, the first pivot bearing is adapted at the upper end and a third pivot bearing is arranged at the lower end such that when the attachment is fixed at the upper arm portion the third pivot bearing is aligned to an elbow rotation axis and is connected to a second attachment being fixable to the lower arm portion of the arm.

6. The arrangement according to claims 1,
wherein the control unit (8) and the power supply unit (9) are integrated in the harness (1).

7. The arrangement according one of the claims 1 to 6,
wherein the control unit (8) is connected at least with one body contact electrode for receiving electrical signals and generates signals to drive the actuator (5) on basis of the electrical signals.

8. The arrangement according to claim 7,
wherein the at least one body contact electrode is a skin contact electrode designed for receiving electromygraphic or spine signals or the at least one body contact electrode is an invasive nerve electrode.

9. The arrangement according to one of the claims 1 to 8,
wherein the control unit (8) is connected with a manually trigger unit (23) and/or with a motion sensor (22) integrated into a wearing unit designed for fastening to a moveable body part of the human.

10. The arrangement according to one of the claims 1 to 9,
wherein the harness (1) provides at least one shoulder strap (1a) to which the first pivot bearing (3) is connected directly or indirectly, a hip belt (1c) and a support link (1b), which connects the shoulder strap (1a) and the hip belt (1c).

11. The arrangement according to one of the claims 1 to 10,
wherein at least one vibrotactile transducer element (27) is arranged directly or indirectly to at least one attachment such that the vibrotactile transducer element (27) contacts the skin of the human.

12. Method for driving the arrangement according to one of the claims 1 to 11 as an exoskeleton for enlarging arm power of a human comprising the step of powering the driven actuator (5) on basis of signals being generated by manual specification and/or by invasive or non-invasive tapping of electrical neuronal signals received from the human.

## Patentansprüche

1. Anordnung zur gesteuerten Bewegung eines menschlichen Arms mit mindestens einem angetriebenen Aktuator (5), der funktionsmäßig mit dem Arm in Eingriff bringbar ist, um eine Drehung um eine Achse eines Gelenks des Arms zu ermöglichen, wobei der angetriebene Aktuator (5) mit einem ersten Schwenklager (3) zusammenwirkt, das an einer ersten Befestigung (2) angebracht ist, welche an einem Oberarmabschnitt des Arms befestigbar ist und wobei das erste Schwenklager (3) mit einem vom Menschen tragbaren Gurtzeug (1) verbunden ist und von diesem getragen wird und der angetriebene Aktuator (5) mit einer Steuereinheit (8) und einer Stromversorgungseinheit (9) verbunden ist, um eine kontrollierte Drehung der am Oberarmabschnitt des Arms des Menschen befestigten ersten Befestigung (2) zu bewirken,
**gekennzeichnet dadurch, dass** die Betätigung des angetriebenen Aktuators (5) bewirkt, dass die erste Befestigung (2) den Oberarmabschnitt ausschließlich um eine Längsachse (R) des Humerus dreht.

2. Anordnung nach Anspruch 1,
wobei ein zweites Schwenklager (4) direkt oder indirekt mit dem ersten Schwenklager (3) verbunden ist, um das erste Befestigungselement (2) um eine Achse senkrecht zur Längsachse (R) des Humerus zu schwenken, und mit dem Gurtzeug (1) verbunden und von diesem getragen wird.

3. Anordnung nach einem der Ansprüche 1 oder 2,
wobei der angetriebene Aktuator (5) an dem ersten Schwenklager (3) montiert oder auf dem Gurt (1) direkt angeordnet und von diesem getragen wird.

4. Anordnung nach einem der Ansprüche 1 bis 3,
wobei der angetriebene Aktuator (5) ein elektrischer, pneumatischer oder hydraulischer Motor mit einer drehbaren Abtriebswelle oder mindestens eine linear bewegliche Komponente ist, im Falle einer drehbaren Abtriebswelle ist die Welle direkt oder indirekt über ein Getriebe mit dem ersten Aufsatz (2) gekoppelt, und im Falle einer linear beweglichen Komponente ist die Komponente mit einem Übertragungsmechanismus (12) zur Umwandlung der linearen Bewegung in eine Drehbewegung gekoppelt.

5. Anordnung nach einem der Ansprüche 2 bis 4,
wobei der Aufsatz ein oberes und ein unteres Ende aufweist, das erste Schwenklager am oberen Ende angeordnet ist und ein drittes Schwenklager am unteren Ende so angeordnet ist, dass, wenn der Aufsatz am oberen Armabschnitt befestigt ist, das dritte Schwenklager auf eine Ellenbogendrehachse ausgerichtet ist und mit einem zweiten Aufsatz verbunden ist, der am unteren Armabschnitt des Arms befestigbar ist.

6. Anordnung nach Anspruch 1,
wobei die Steuereinheit (8) und die Stromversorgungseinheit (9) in den Kabelbaum (1) integriert sind.

7. Anordnung nach einem der Ansprüche 1 bis 6,
wobei die Steuereinheit (8) mit mindestens einer Körperkontaktelektrode zum Empfangen elektrischer Signale verbunden ist und auf der Grundlage der elektrischen Signale Signale zum Ansteuern des Aktuators (5) erzeugt.

8. Anordnung nach Anspruch 7,
wobei die mindestens eine Körperkontaktelektrode eine Hautkontaktelektrode ist, die zum Empfangen elektromyografischer oder Wirbelsäulensignale ausgelegt ist, oder die mindestens eine Körperkontaktelektrode eine invasive Nervenelektrode ist.

9. Anordnung nach einem der Ansprüche 1 bis 8,
wobei die Steuereinheit (8) mit einer manuell auslösbaren Einheit (23) und/oder mit einem Bewegungssensor (22) verbunden ist, der in eine Trageeinheit integriert ist, die zur Befestigung an einem beweglichen Körperteil des Menschen ausgelegt ist.

10. Anordnung nach einem der Ansprüche 1 bis 9,
wobei der Gurt (1) mindestens einen Schultergurt (1a), mit dem das erste Schwenklager (3) direkt oder indirekt verbunden ist, einen Hüftgurt (1c) und ein Verbindungsglied (1b) aufweist, das den Schultergurt (1a) und den Hüftgurt (1c) verbindet.

11. Anordnung nach einem der Ansprüche 1 bis 10,
wobei mindestens ein vibro-taktiles Wandlerelement (27) direkt oder indirekt an mindestens einer Befestigung so angeordnet ist, dass das vibro-taktile Wandlerelement (27) die Haut des Menschen berührt.

12. Verfahren zum Ansteuern der Anordnung gemäß einem der Ansprüche 1 bis 11 als Exoskelett zur Steigerung der Armkraft eines Menschen durch Ansteuerung des angetriebenen Aktuators (5) auf der Grundlage von Signalen, die durch manuelle Eingabe und/oder durch invasive oder nicht-invasive Erfassung elektrischer neuronaler Signale, die vom Menschen empfangen werden, erzeugt werden.

## Revendications

1. Dispositif pour un mouvement contrôlé d'un bras humain, comportant au moins un actionneur motorisé (5) pouvant être couplé fonctionnellement au bras pour permettre une rotation autour d'un axe d'une articulation du bras,
dans lequel l'actionneur motorisé (5) interagit avec un premier palier de pivotement (3) étant fixé à un premier élément de fixation (2) qui peut être solidarisé avec une partie supérieure du bras,
et ledit premier palier de pivotement (3) est raccordé à et soutenu par un harnais (1) pouvant être porté par la personne et est supporté par celui-ci, et l'actionneur motorisé (5) est connecté à une unité de commande (8) et à une unité d'alimentation électrique (9) pour assurer une rotation contrôlée du premier élément de fixation (2) fixé à la partie supérieure du bras de la personne,
**caractérisé en ce que** l'actionnement de l'actionneur motorisé (5) amène le premier élément de fixation (2) à faire tourner exclusivement la partie supérieure du bras autour d'un axe longitudinal (R) de l'humérus.

2. Dispositif selon la revendication 1,
dans lequel un deuxième palier de pivotement (4) est raccordé directement ou indirectement au premier palier de pivotement (3) pour faire pivoter le premier élément de fixation (2) autour d'un axe orthogonal à l'axe longitudinal (R) de l'humérus et est raccordé au et soutenu par le harnais (1).

3. Dispositif selon la revendication 1 ou 2,
dans lequel l'actionneur motorisé (5) est monté sur ledit premier palier de pivotement (3) ou disposé directement sur et soutenu par le harnais (1).

4. Dispositif selon une des revendications 1 à 3,
dans lequel l'actionneur entraîné (5) est un moteur électrique, pneumatique ou hydraulique comportant un arbre de sortie rotatif ou au moins un composant mobile linéairement,
dans le cas d'un arbre de sortie rotatif, l'arbre est couplé directement ou indirectement par un engrenage au premier élément de fixation (2) et, dans le cas d'un composant mobile linéairement, le composant est couplé à un mécanisme de transmission (12) pour transformer un mouvement linéaire en une rotation.

5. Dispositif selon une des revendications 2 à 4,
dans lequel l'élément de fixation présente une extrémité supérieure et une extrémité inférieure, le premier palier de pivotement est adapté à l'extrémité supérieure et un troisième palier de pivotement est disposé à l'extrémité inférieure de telle sorte que, lorsque l'élément de fixation est fixé à la partie supérieure du bras, le troisième palier de pivotement est aligné avec un axe de rotation du coude et est raccordé à un deuxième élément de fixation pouvant être fixé à la partie inférieure du bras.

6. Dispositif selon la revendication 1,
dans lequel l'unité de commande (8) et l'unité d'alimentation électrique (9) sont intégrées dans le harnais (1).

7. Dispositif selon une des revendications 1 à 6,
dans lequel l'unité de commande (8) est connectée à au moins une électrode de contact corporel pour recevoir des signaux électriques et génère des signaux pour commander l'actionneur (5) sur la base des signaux électriques.

8. Dispositif selon la revendication 7,
dans lequel au moins une électrode de contact corporel est une électrode de contact cutané conçue pour recevoir des signaux électromyographiques ou rachidiens, ou au moins une électrode de contact corporel est une électrode nerveuse invasive.

9. Dispositif selon une des revendications 1 à 8,
dans lequel l'unité de commande (8) est connectée à une unité de déclenchement manuel (23) et/ou à un capteur de mouvement (22) intégré dans une unité de port conçue pour être fixée à une partie mobile du corps humain.

10. Dispositif selon une des revendications 1 à 9,
dans lequel le harnais (1) comprend au moins une bretelle (1a) à laquelle le premier palier de pivotement (3) est raccordé directement ou indirectement, une ceinture ventrale (1c) et une liaison de support (1b), qui raccorde la bretelle (1a) et la ceinture ventrale (1c).

11. Dispositif selon une des revendications 1 à 10,
dans lequel au moins un élément transducteur vibrotactile (27) est disposé directement ou indirectement sur au moins un élément de fixation, de telle sorte que l'élément transducteur vibrotactile (27) soit en contact avec la peau de la personne.

12. Procédé de commande du dispositif selon une des revendications 1 à 11 en tant qu'exosquelette pour accroître la force des bras d'une personne, comprenant l'étape consistant à alimenter l'actionneur motorisé (5) sur la base de signaux étant générés par une commande manuelle et/ou par le captage, invasif ou non invasif, de signaux neuronaux électriques provenant de la personne.
